# EUROPEAN PATENT APPLICATION

(11) **EP 4 527 572 A1**
(43) Date of publication of application: **26.03.2025**
(21) Application number: 24201893.5
(22) Date of filing: 23.09.2024
(51) Int. Cl.: B25J 17/02

(54) **ROBOTIC ARM WITH ROLL REORIENTATION AND GRAPPLE MECHANISMS**

(30) Priority: 25.09.2023 US 202363585071 P
(71) Applicant: MacDonald, Dettwiler and Associates Inc., Brampton, Ontario L6Y 6K7 (CA)
(72) Inventor: Sachdev, Tej Singh, Brampton L6Y 6K7 (CA); Ogilvie, Andrew, Brampton L6Y 6K7 (CA); Lymer, John, Brampton L6Y 6K7 (CA); Scarpelli, Chris, Brampton L6Y 6K7 (CA)
(74) Representative: Kutzenberger Wolff & Partner

(57) **Abstract**

Robotic arms with orientation and grapple mechanisms for payload manipulation are provided. A robotic arm includes a mechanical arm assembly having booms connected by actively driven joints to provide pitch and yaw control at the shoulder, elbow and wrist of the arm. To reduce mass and complexity, according to various embodiments, force moment sensors and/or actuators for active roll and/or yaw control at the end of the arm may be omitted. The orienting mechanism provides the grapple mechanism with passive pitch and yaw control to pivot the grapple mechanism to grasp a payload without having to actively position the end effector to align with an axis of the payload. This enables "soft" capture of the payload by the grapple mechanism. Prior to lifting the payload, the grapple fixture is rigidized by fully retracting the grapple mechanism.

## Description

### Technical Field

The embodiments disclosed herein relate to robotic arms for lifting objects, and, in particular to a robotic arm with passive and active orientation and grapple mechanisms for payload manipulation.

### Introduction

Remote controlled robotic arms have numerous applications on earth, in space and on celestial bodies. For in-space applications, robotic arms are typically mounted on vehicles, (e.g., spacecraft, space stations, rovers) to perform a variety of tasks. As an example, a robotic arm on a space station may be used to grasp a payload (e.g., a cargo module) in orbit. Another example is the use of a robotic arm on a rover to pick up and transport a payload (e.g., regolith samples) on the lunar surface.

Mass is a key consideration when designing robotic arms for in-space applications since the arm, and the vehicle it is mounted to, must be launched into orbit. Moving heavier loads into orbit requires more fuel to be carried which further adds to the overall mass.

Another consideration is the range of movement the robotic arm is capable of. The range of movement is expressed as degrees of freedom (pitch, roll, yaw) in the arm. While it may be desirable to have a robotic arm that is capable of at least 6 degrees of freedom (i.e., capable of movement in all X, Y, Z directions), higher degrees of freedom require more components to drive the pitch, roll and yaw of the robotic arm and thus add cost, weight, and complexity to the arm.

Another challenge is managing loads applied to a payload when the payload is manipulated by the robotic arm. Typically, robotic arms include force moment sensors (i.e., touch sensors) to measure the forces exerted on the payload. However, sensors also add weight and complexity.

Size is a further consideration. Cargo space aboard a spacecraft or launch vehicle is limited. As such, robotic arms for in-space applications, such as the Canadarm^{®}, are built with articulable segments that can be packed together in a stowage configuration for transport into orbit. However, stowage interfaces of the arm may ultimately constrain the degrees of freedom in the arm.

Accordingly, there is a need for new robotic arms for terrestrial and in-space applications that are light, stowable and having fewer active degrees of freedom for payload manipulation.

### Summary

Robotic arms with active and passive orientation and grapple mechanisms for payload manipulation are provided.

According to some embodiments, there is a robotic arm for payload manipulation. The robotic arm comprises a mechanical arm assembly and an end effector. The mechanical arm assembly includes booms connected by actively driven joints. The actively driven joints provide at least 3 degrees of freedom to the robotic arm.

The end effector comprises an actively driven grapple mechanism for grasping a payload; and an orienting mechanism for providing pitch, yaw and back-driven roll degree of freedom to the grapple mechanism.

The grapple mechanism comprises a linear drive system, at least 2 claws for grasping the payload, each claw including a linkage to the linear drive system, wherein the linkage converts the linear motion from the drive system to extend, or retract, each claw.

The orienting mechanism comprises a rotary joint connected to the grapple mechanism for providing passive pitch and yaw to the grapple mechanism and a pressure plate assembly for providing back-driven roll degree of freedom to the end effector.

According to an embodiment there is a method for manipulating a payload by a robotic arm. The method comprises maneuvering the robotic arm to an approach-ready position relative to the payload; maneuvering the robotic arm to hover over the payload; setting an end effector grapple mechanism state for capture of the payload; maneuvering the end effector grapple mechanism to capture the payload; performing a soft capture of the payload; rigidizing the payload; and raising the payload from a current location.

The method may further comprise unstowing the robotic arm from a compact configuration; and performing checkout activities to prepare for operations. The method may further comprise maneuvering the robotic arm holding the rigidized payload to a roll post; maneuvering the robotic arm to push the payload against the roll post to reorient the payload; verifying alignment of the reoriented payload; and rigidizing the reoriented payload. The method may further comprise maneuvering the robotic arm holding the rigidized payload to hover over a surface; de-rigidizing the payload; lowering the payload onto the surface; and releasing the payload. The method may further comprise retracting the robotic arm; and stowing the robotic arm in a compact configuration.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. The drawings are not to scale and are for exemplary purposes only. In the drawings:
FIG. 1 is a flow diagram of a method for manipulating a payload by a robotic arm, according to an embodiment;
FIG. 2A is a diagram of a robotic arm, according to an embodiment;
FIGS. 2B-2E are diagrams of an end effector, according to an embodiment;
FIG. 3 is a diagram of an end effector, according to an embodiment;
FIG. 4 is a flow diagram of a method for picking up a payload by a robotic arm, according to an embodiment;
FIGS. 5A-5C are diagrams showing steps in the method of FIG. 4 performed by the robotic arm;
FIGS. 6A-6D are diagrams showing steps in the method of FIG. 4 performed by an end effector;
FIG. 7 is a flow diagram of a method for putting down a payload by a robotic arm, according to an embodiment;
FIGS. 8A-8E are diagrams showing steps in the method of FIG. 7 performed by the robotic arm;
FIGS. 9A-9D are diagrams showing steps in the method of FIG. 7 performed by an end effector;
FIG. 10 is a flow diagram of a method for reorienting a payload by a robotic arm, according to an embodiment;
FIGS. 11A-11B are diagrams showing steps in the method of FIG. 10 performed by the robotic arm; and
FIGS. 12A-12B are diagrams showing steps in the method of FIG. 10 performed by an end effector.

### Detailed Description

A robotic arm apparatus and methods for manipulating a payload will be described below to provide an example of each claimed embodiment. The robotic arm apparatus and methods disclosed herein are generally for implementation on celestial bodies (e.g., the moon or Mars), or orbital applications. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

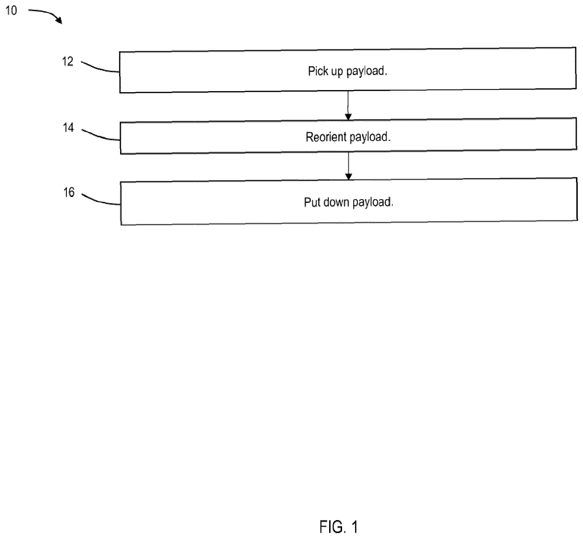

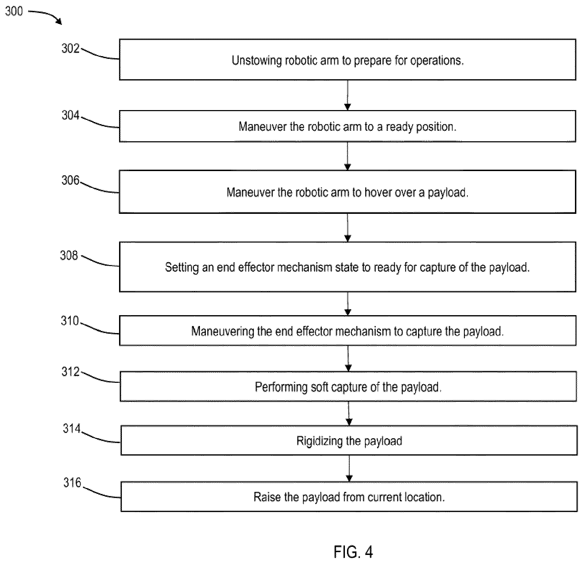

Referring to FIG. 1, shown therein is a flow diagram of a method 10 for manipulating a payload by a robotic arm. The method 10 may be implemented for a plurality of tasks including: picking up payloads from a rover deck and placing them on the lunar surface, or vice-versa; retrieving payloads from a storage location, such as a lander or depot, and placing them on the rover deck for transport; hooking up a trailer to a towing vehicle; picking up tools (e.g., cameras, instrumentation, drill); and collecting lunar samples. The method 10 comprises three general steps 12, 14, 16 that are common to all of the tasks the method 10 is implemented for. Each step 12, 14, 16 may comprise a sub-method that are shown in FIGS. 4, 7 and 10 and described below.

Briefly, at 12, the robotic arm picks up a payload. The arm includes an end effector having a grapple mechanism for grasping the payload. According to some embodiments, the end effector may be detachable/swappable. At 14, the arm reorients the payload. Reorientation generally means moving the robotic arm to change the position and/or orientation of the payload. At 16, the arm puts the payload down on a surface.

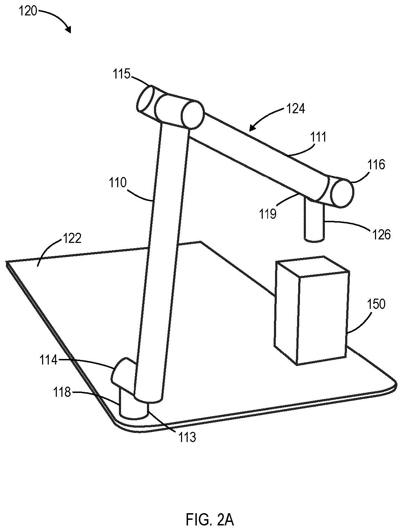

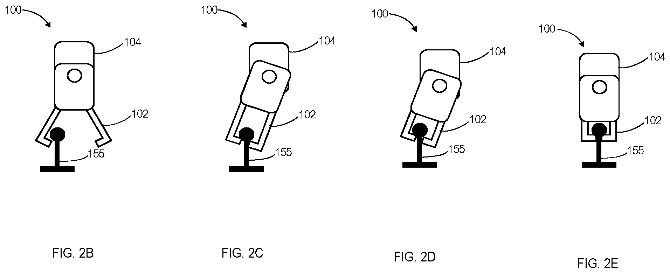

Referring to FIG. 2A, shown therein is a diagram of a robotic arm 120, according to an embodiment. The arm 120 includes a mechanical arm assembly 124 and an end effector 126 for grasping a payload 150. The robotic arm 120 includes an arm-host interface 118 that physically, mechanically, and electrically connects the robotic arm 120 to a host structure such as a vehicle 122 (e.g., a rover) or a platform like the deck of a lander. An arm-end effector interface 119 physically and electrically connects the mechanical arm assembly 124 to the end effector 126. At least one camera (not shown) is disposed on the arm (e.g., at the interface 119) to view the end effector 126 and the payload 150.

The mechanical arm assembly 124 includes booms 110, 111 connected by actively driven joints 113, 114, 115, 116. The joints include a shoulder pitch and yaw joints 113, 114, an elbow pitch joint 115 and a wrist pitch joint 116. The combined operation of the active joints 113, 114, 115, 116 provide the robotic arm 120 with 4 degrees of freedom (shoulder pitch and yaw, elbow pitch and wrist pitch). The booms 110, 111 include tube links between the joints 114, 115, 116.

The tolerances and components of the robotic arm 120 are constructed to minimize mass and complexity, while allowing the arm 120 to operate without maintenance in harsh space and lunar environments when being exposed to dust, temperatures of -120 to 50 degrees Celsius and radiation. The robotic arm 120, in particular, the moving parts including the joints 113, 114, 115, 116, and the end effector 126 must be at least dust tolerant. According to an embodiment, the joints 113, 114, 115, 116, and in particular the end effector 126, are sealed to protect from dust and regolith.

To reduce mass and complexity, force moment sensors (i.e., touch sensors) that are typically used in robotic arms to sense the forces exerted on the payload 150 may be omitted. To further reduce mass toward the end effector 126 tip of the arm 120, and reduce loads at the shoulder generally, actuators for roll and/or yaw control at the tip may be eliminated. For example, according to an embodiment, the elbow joint 115 and the wrist joint 116 have no actuators to produce roll or yaw motion. These constraints create challenges in managing loads applied to the payload 150 when it is picked up, manipulated, or put down. This may be especially true if the payload 150 is picked up or put down in a confined space where the confines of the space constrain the degrees of freedom of the robotic arm 120. These challenges are mitigated by features of the end effector 126, as described below.

Referring to FIGS. 2B-2E, shown therein is a diagram of an end effector 100, according to an embodiment. The end effector 100 includes an actively driven grapple mechanism 102 for grasping a payload via a grapple fixture 155 attached to the payload (payload not shown in Figures 2B-2E) and an orienting mechanism 104 for orienting the grapple mechanism 102. The grapple mechanism 102 includes claws, jaws, or the like, for grasping the grapple fixture 155 (and thus the payload).

The orienting mechanism 104 provides the grapple mechanism 102 with passive pitch and yaw degrees of freedom to pivot the grapple mechanism 102 to grasp the grapple fixture 155 without having to actively position the end effector 100 to align with the axis of the grapple fixture 155 (FIGS. 2B-2C). This allows for a "soft" capture of the grapple fixture 155 by the grapple mechanism 102 when the end effector 100 drives forward to shorten an effective retraction distance (FIG. 2D). Prior to lifting the payload, the grapple fixture 155 is rigidized by the end effector 100 by fully retracting the grapple mechanism 102 (FIG. 2E).

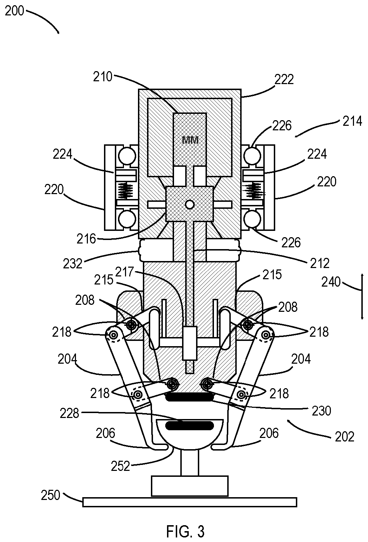

Referring to FIG. 3, shown therein is a diagram of an end effector 200, according to an embodiment. The end effector 200 may be the end effector 126, 100 shown in FIGS. 2A and 2B-2E, respectively. The end effector 200 includes an actively driven grapple mechanism 202 for grasping a payload 250.

The payload 250 includes a grapple fixture 252 on an external surface of the payload 250. The grapple fixture 252 is not necessarily centered or aligned with the payload center of mass. An allowable range of center of gravity positions relative to the grapple fixture 252 may be defined for the payload 250. Preferably, the grapple fixture 252 is shaped to be grasped by the grapple mechanism 202. The grapple fixture 252 includes a contact surface 228 for contacting a corresponding contact surface 230 on the grapple mechanism 202.

The grapple mechanism 202 includes at least 2 claws 204 to close around the grapple fixture 252. Each claw 204 draws to a curved tip 206. According to an embodiment, opening and closing of the claws 204, is driven by a motor 210 actuating a linear drive system 212 (e.g., a ball screw, a lead screw, acme screw, linear actuator, etc.). Each claw 204 includes a linkage 208 (e.g., a 4-bar linkage) to the linear drive system 212. In the embodiment shown, an extension link 215 transfers the linear motion of a screw drive 212 to each claw 204 by rotating the driven link of the 4-bar linkage 208. When the screw 212 rotates, a ball nut 217 connected to the extension link 215 moves axially (indicated by arrow 240), causing rotation of the 4-bar linkage 208 and the claws 204 open or close.

It should be noted that, advantageously, only rotary seals are required for sealing the joint connection points 218 from dust, rather than a linear seal, which is more complex to implement.

The motor 210 includes an angular position sensor for motor and joint position monitoring to estimate the grapple mechanism 202 position/state (i.e., open or closed). The grapple mechanism 202 may further include end of travel switches that are triggered when the claws 204 are fully open and fully closed, respectively. According to another embodiment, the grapple mechanism 202 includes a home position switch and the motor resolver for estimating position/state of the claws 204.

The end effector 200 includes an orienting mechanism 214. The orienting mechanism 214 includes a pressure plate assembly 220 for providing roll degree of freedom to the end effector 200. The pressure plate assembly 220 includes a set of bearings 226 between an inner housing 222 that holds the grapple mechanism 202, and an outer housing (not shown) that attaches the end effector 200 to the mechanical arm. A spring-loaded friction disk 224 allows for friction of the pressure plate assembly 220 to be tuned.

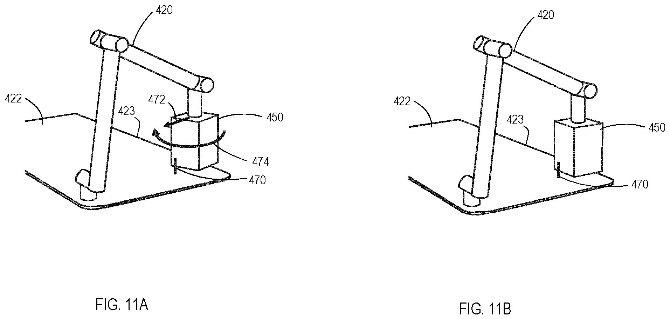

Friction at the friction disk-bearing interface must be sufficient to prevent unwanted rolling of the end effector 200 under the action of the payload 250 mass if the payload 250 center of gravity is offset from the end effector 220 central axis. However, the friction cannot be too high to prevent back-driven roll degree of freedom of the end effector 200. Generally, the back-driven roll of the end effector 200 in clockwise or counterclockwise directions is accomplished using a roll post (see FIGS. 11-12). The roll travel is also limited in clockwise and counterclockwise directions to inhibit continuous motion that may twist cables of the end effector 200.

The orienting mechanism 214 includes end of travel switches for monitoring the clockwise and counterclockwise roll of the end effector 200. According to an embodiment, the orienting mechanism 214 includes a home position switch for estimating the roll position of the end effector 200. According to another embodiment, the end effector 200 includes a "return" feature for resetting position of the end effector using the roll post.

The orienting mechanism 214 includes a passive wobble joint 216 for providing pitch and yaw (i.e., rotational degree of freedom) compliance to the end effector 200 when back driven by application of external force to the held payload 250. The wobble joint 216 is depicted as a spherical joint, but does not have a roll degree of freedom. The rotary joint is sealed from dust/regolith by a flexible shield-seal 232.

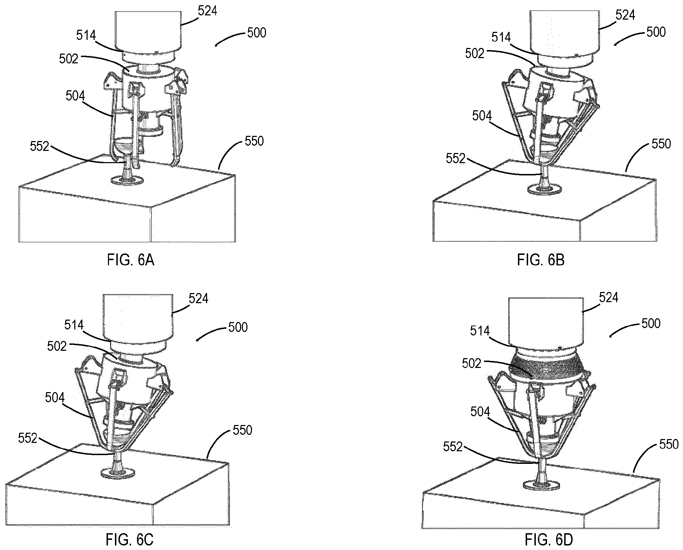

Lockout/rigidizing of the wobble joint 216 is accomplished by retracting/raising the claws 204 until the payload contact surface 228 meets the contact surface 230 on the grapple mechanism 202 (see FIGS. 6C and 6D). The contact of the surfaces 228, 230 is coordinated with the contact of an internal hard stop (not shown) that aligns the wobble joint 216 such that both the grapple fixture 252 and the wobble joint 216 become aligned to the end effector 200 axis simultaneously and are rigidly held in that position to lockout movement of wobble joint 216. This prevents pitch and yaw of the payload 250 and rigidizes the payload 250 with respect to the grapple mechanism 202/end effector 200.

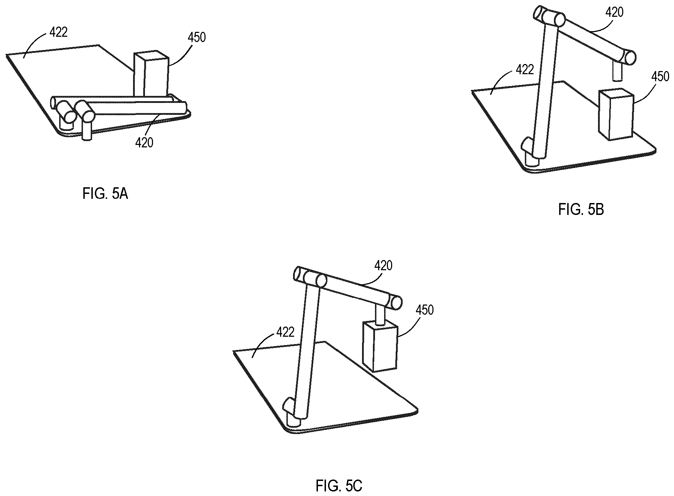

Referring to FIG. 4, shown therein is a flow diagram of a method 300 for picking up a payload by a robotic arm, according to an embodiment. The method 300 may be performed at step 12 of the method 10 in FIG. 1. The acts in the method 300 are depicted in FIGS. 5A-5C and 6A-6D. The method 300 may be implemented for a variety of tasks including payload transfer from a rover deck to the lunar surface (or vice versa), collecting lunar samples and picking up instruments/tools.

At 302, a robotic arm is unstowed from a stowage configuration. In the embodiment shown in FIG. 5A, the robotic arm 420 is stowed aboard a vehicle 422 (e.g., in a cargo bay of a lander or a rover) in a compact stowage configuration. In other embodiments, the robotic arm 420 may be attached to a platform on a host structure other than a vehicle.

At 304, the robotic arm 420 is maneuvered to a ready position with respect to a payload 450.

At 306, the robotic arm 420 is maneuvered so the end effector hovers over the payload 450 (FIGS. 5B and 6A). As shown in FIG. 6A, the end effector 500 and grapple mechanism 502 are generally positioned over the payload 550 but may not be centered with respect to the payload 550 and/or the grapple fixture 552. That is, the end effector 500 and grapple mechanism 502 may be laterally and longitudinally offset from the grapple fixture 552 axis.

At 308, an end effector grapple mechanism is set in a state ready for capture of the payload (Fig. 6A). The claws 504 are extended to an open position in preparation for grasping the payload 550. The end effector 500 is moved by the mechanical arm assembly 524 to position the grapple fixture 552 between the open claws 504.

At 310, the grapple mechanism is maneuvered to capture the payload. As shown in FIG. 6B, the claws 504 are closed around the grapple fixture 552. As the closing claws 504 contact the grapple fixture 552, the orienting mechanism 514 of the end effector 500 provides passive pitch and yaw compliance to allow for offset grappling of the grapple fixture 552 by the grappling mechanism 502. Pitch and yaw compliance also allows for the payload 550 to be picked up from a sloped surface.

At 312, soft capture of the payload by the grapple mechanism is performed. As shown in FIG. 6C, the end effector 500 drives forward to shorten the effective retraction distance of the grapple mechanism 502. As the end effector 500 drives forward, the claws 504 pull on the grapple fixture 552 to draw together respective contact surfaces on the grapple mechanism 502 and the grapple fixture 552.

At 314, the payload is rigidized. As shown in FIG. 6D, the claws 504 are retracted to a closed position which rigidized the payload 550 when the respective contact surfaces on the grapple fixture 552 and the grappling mechanism 502 meet. This also locks out the orienting module 514 locking pitch and yaw of the payload 550.

At 316, the payload is raised from its current location (FIG. 5C). The robotic arm 420 is articulated to lift the payload 450 from its current location.

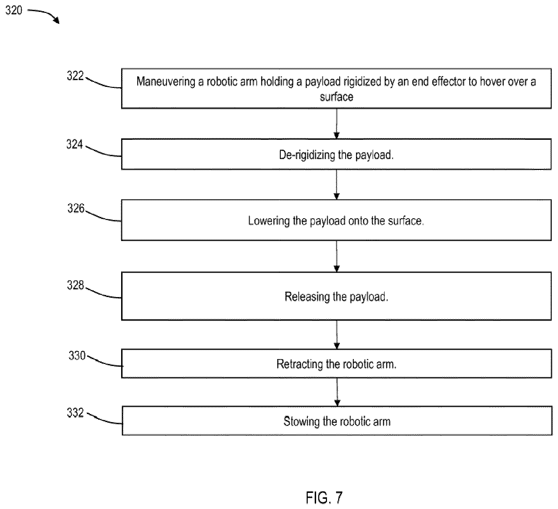

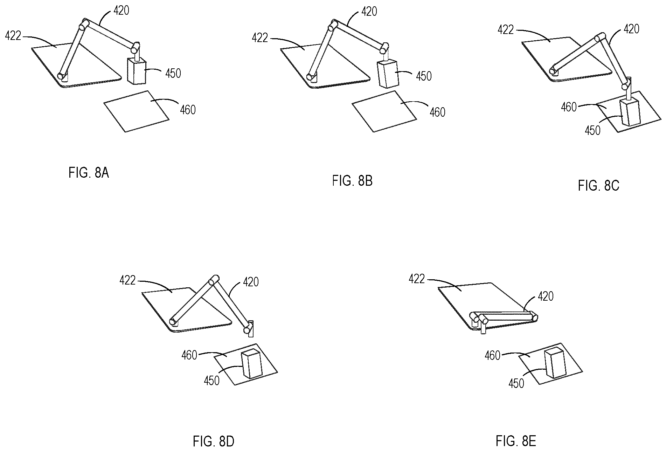

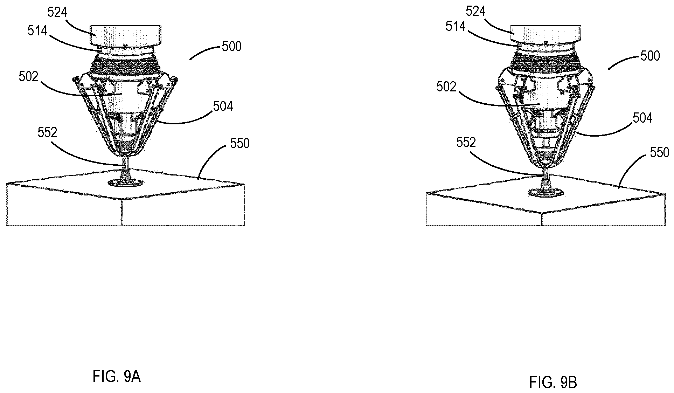

Referring to FIG. 7, shown therein is a flow diagram of a method 320 for putting down a payload by a robotic arm, according to an embodiment. The method 320 may be performed at step 16 of the method 10 in FIG. 1. The acts in the method 320 are depicted in FIGS. 8A-8E and 9A-9D. The method 320 may be implemented for a variety of tasks including payload transfer from a rover deck to the lunar surface (or vice versa), collecting lunar samples and picking up instruments/tools.

At 322, a robotic arm having an end effector holding a rigidized payload is maneuvered to hover over a surface (FIGS. 8A, 9A). As shown in FIG. 8A, the robotic arm 420 may be mounted on a vehicle 422 (e.g., a lander or a rover) and holds the rigidized payload 450 above a surface 460 (e.g., the lunar surface). As shown in FIG. 9A, the payload 550 is rigidized by the end effector 500. The claws 504 of the grappling mechanism 502 are retracted in a closed position around the grapple fixture 552. Contact between the respective surfaces of the grapple fixture 552 and the grapple mechanism 502 locks out the pitch and yaw compliance of the orienting mechanism 514.

At 324, the payload is de-rigidized (FIGS. 8B, 9B). As shown in FIG. 8B, when the payload 450 is de-rigidized, the payload 450 can tilt and rotate (i.e., pitch and yaw) when not being rigidly held by the robotic arm 420. As shown in FIG. 9B, the claws 504 of the grapple mechanism 502 are partially extended to allow the respective contact surfaces on the grapple fixture 522 and the grappling mechanism 502 to separate, thereby de-rigidizing the payload 550 and unlocking the orienting mechanism 514 to allow the payload 550 to pitch and yaw. It should be noted that the claws 502 still hold onto the grapple fixture 552 (and the payload 550) when the payload 550 is de-rigidized.

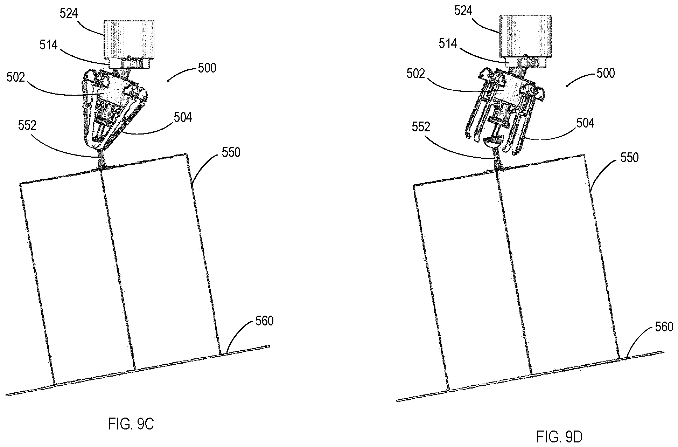

At 326, the payload is lowered onto the surface in a "let down stroke" (FIGS. 8C, 9C). As shown in FIG. 8C, the robotic arm 420 is articulated for the let down stroke to deposit the payload 450 onto the surface 460. The robotic arm 420 movement alone (without end effector movement) is used for most of the let down stroke.

As shown in FIG. 9C, the end effector 500 only needs passive pitch and yaw degrees of freedom provided by the orienting module 514 to accommodate final touch-down of the payload 550 onto the surface 560. Passive pitch and yaw degrees of freedom allows for the payload 550 to be lowered gently onto a surface 560 that is inclined. Otherwise, the grapple mechanism 502 would require a degree of active travel to let the payload 550 down onto slopes, adding complexity. The grapple mechanism 502 also includes a short-stroke, compliant (spring travel) contact point with an indicator switch to register when the payload 550 touches down on the surface 560.

At 328, the payload is released (FIGS. 8D, 9D). As shown in FIG. 9D, the claws 504 of the grapple fixture 502 are fully extended and release hold of the grapple fixture 552.

At 330, the robotic arm is retracted. At 332, the robotic arm is stowed in a compact configuration (FIG. 8E).

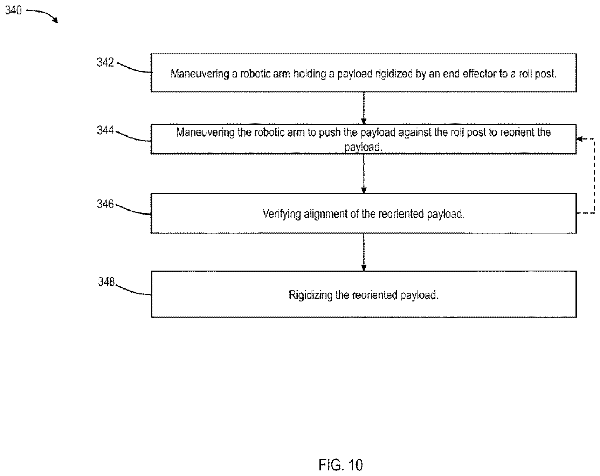

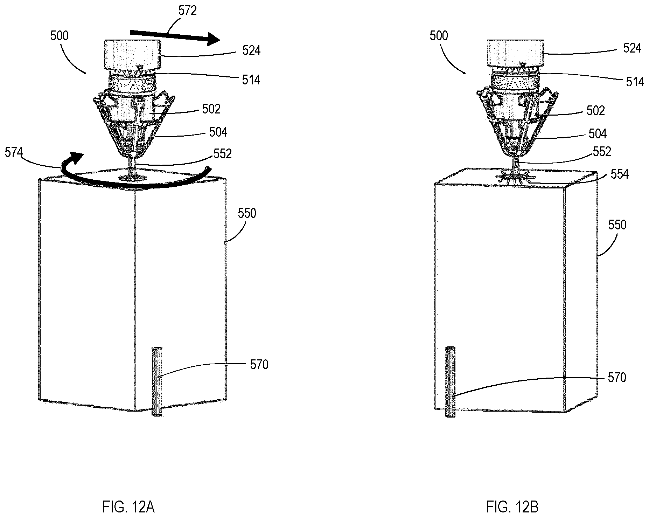

Referring to FIG. 10, shown therein is a flow diagram of a method 340 for reorienting a payload. The method 340 may be performed at step 14 of the method 10 in FIG. 1. The method 340 may be implemented for reorienting a payload for efficient storage or to fit a payload within a confined space. Certain acts in the method 340 are depicted in FIGS. 11A-11B and 12A-12B.

At 342, a robotic arm having an end effector holding a payload is maneuvered to a roll post.

As shown in FIG. 11A, the payload 450 when held by the robotic arm 420 is not aligned with the edge 423 of the vehicle 422 (e.g., a lander, a rover). For efficient storage, the payload 450 must be rotated to align with the edge 423. As noted above, the robotic arm 420 does not have an actively driven wrist roll joint to rotate the payload 450. Instead, a roll post 470 disposed on the vehicle 422 in proximity to the robotic arm 420 is provided to overcome limitations of the degrees of freedom of the robotic arm 420 and align the payload 450 with the edge 423 for efficient storage.

At 344, the robotic arm is maneuvered to push the payload against the roll post to reorient the payload. As shown in FIG. 12A, the orienting mechanism 514 provides the end effector 500 with a passive roll degree of freedom. The end effector 500 holding the payload 550 can be back-driven when the robotic arm 524 pushes an edge of the payload 550 against the roll post 570.

A sufficient amount of back-drive torque is required to overcome the friction in the orienting mechanism 514 that prevents the payload 550 from rolling due to gravity. That is, the payload 550 will only roll when there is sufficient back-driven torque applied by the robotic arm 24 and the roll post 570. For example, when the robotic arm 524 moves in the direction of the arrow 572 with sufficient force, the end effector 500 and the payload 550 will rotate in the direction of the arrow 574.

At 346, the alignment of the reoriented payload is verified. As shown in FIG. 12B, the payload 550 includes fiducial markings 554 on the top of the payload 550 around the grapple fixture 552. The markings 554 are visible to the camera (not shown) on the robotic arm and are used to determine when the target payload roll angle has been achieved. If the alignment of the payload is incorrect, the method 340 reverts to step 344 until the correct alignment is achieved.

At 348, the payload is rigidized by the end effector.

While the above description provides examples of one or more apparatus, methods, or systems, it will be appreciated that other apparatus, methods, or systems may be within the scope of the claims as interpreted by one of skill in the art.

## Claims

1. An end effector for a robotic arm, the end effector comprising:
an actively driven grapple mechanism for grasping a payload; and
an orienting mechanism for providing pitch, yaw and back-driven roll degree of freedom to the grapple mechanism.

2. The end effector of claim 1, wherein the grapple mechanism comprises:
a linear drive system;
at least 2 claws for grasping the payload, each claw including a linkage to the linear drive system,
wherein the linkage converts the linear motion from the drive system to extend, or retract, each claw.

3. The end effector of claim 1, wherein the orienting mechanism comprises:
a rotary joint connected to the grapple mechanism for providing passive pitch and yaw to the grapple mechanism; and
a pressure plate assembly for providing back-driven roll degree of freedom to the end effector.

4. The end effector of claim 3, wherein the rotary joint and the pressure plate assembly are sealed to protect from dust.

5. The end effector of claim 1, wherein the grapple mechanism comprises:
a ball screw driven by a motor;
at least two claws for grasping the payload, each claw including a 4-bar linkage and an extension link connected to the ball screw,
wherein the extension link transfers the linear motion of the ball screw to rotate a driven link of the 4-bar linkage to extend, or retract, each claw

6. A robotic arm, comprising:
a mechanical arm assembly, comprising:
booms connected by actively driven joints, wherein the actively driven joints provide at least 3 degrees of freedom to the robotic arm; and
the end effector of any one of claims 1-5.

7. The robotic arm of claim 6, wherein the grapple mechanism comprises:
a ball screw driven by a motor;
at least two claws for grasping the payload, each claw including a 4-bar linkage and an extension link connected to the ball screw,
wherein the extension link transfers the linear motion of the ball screw to rotate a driven link of the 4-bar linkage to extend, or retract, each claw.

8. The robotic arm of claim 6, wherein the actively driven joints are sealed to protect from dust.

9. The robotic arm of claim 6, further comprising:
at least one camera positioned to view the end effector and the payload.

10. A method of manipulating a payload by a robotic arm, comprising:
maneuvering the robotic arm to an approach-ready position relative to the payload;
maneuvering the robotic arm to hover over the payload;
setting an end effector grapple mechanism state for capture of the payload;
maneuvering the end effector grapple mechanism to capture the payload;
performing a soft capture of the payload;
rigidizing the payload; and
raising the payload from a current location.

11. The method of claim 10, further comprising:
unstowing the robotic arm from a compact configuration; and
performing checkout activities to prepare for operations.

12. The method of claim 11, further comprising:
maneuvering the robotic arm holding the rigidized payload to a roll post;
maneuvering the robotic arm to push the payload against the roll post to reorient the payload;
verifying alignment of the reoriented payload; and
rigidizing the reoriented payload.

13. The method of claim 11, further comprising:
maneuvering the robotic arm holding the rigidized payload to hover over a surface;
de-rigidizing the payload;
lowering the payload onto the surface; and
releasing the payload.

14. The method of claim 13, further comprising:
retracting the robotic arm; and
stowing the robotic arm in a compact configuration.
